# EUROPEAN PATENT APPLICATION

(11) **EP 3 800 208 A1**
(43) Date of publication of application: **07.04.2021**
(21) Application number: 19201537.8
(22) Date of filing: 04.10.2019
(51) Int. Cl.: C08F 110/02, C08F 4/64

(54) **ULTRAHIGH MOLECULAR WEIGHT POLYETHYLENE RESIN AND MOLDED BODY COMPRISING THE SAME**

(71) Applicant: University Maastricht, 6211 LK Maastricht (NL); Teijin Limited, Osaka 530-0005 (JP)
(72) Inventor: RASTOGI, Sanjay, 6167 RD Geleen (NL); ROMANO, Dario, 6167 RD Geleen (NL); SHIGEMATSU, Teruyuki, Osaka-shi, Osaka 530-0005 (JP); OYA, Taro, Osaka-shi, Osaka 530-0005 (JP); KANEKO, Hiroaki, Osaka-shi, Osaka 530-0005 (JP)
(74) Representative: J A Kemp LLP

(57) **Abstract**

The invention relates to an ultrahigh molecular weight polyethylene resin having a weight average molecular weight of 1.0×10⁶ g/mol to 15.0×10⁶ g/mol and a molecular weight distribution between 1.2 to 6.0. The invention also relates to a method for producing an ultrahigh molecular weight polyethylene resin and articles comprising the resin.

## Description

### [Technical Field]

The present invention relates to an ultrahigh molecular weight polyethylene resin having high impact resistance and a molded body comprising the ultrahigh molecular weight polyethylene resin, which is used suitably as a sliding member, and a method for producing the ultrahigh molecular weight polyethylene.

### [Background Art]

Because ultrahigh molecular weight polyethylene has a molecular weight that exceeds 1 million g/mol, it has effects of being excellent in impact resistance, self-lubricity, chemical resistance, dimensional stability, lightweightness, food stability, and the like, which are not seen in ordinary polyethylene-based polymers. Therefore, the ultrahigh molecular weight polyethylene is, as a material having physical properties comparable to engineering plastics, molded by various molding methods such as extrusion molding, compression molding, and the like and is fabricated to be used in applications such as lining materials, machine parts, food containers, ballistic resistant fibers, medical members, and the like.

An ultrahigh molecular weight polyethylene-based polymer produced by a normally used Ziegler-Natta catalyst provides a polymer having a very broad molecular weight distribution, where an ultrahigh molecular weight component and a low molecular weight component are mixed homogeneously. The presence of ultrahigh molecular weight component hinders the ease in processing of the polymer, while the low molecular weight component reduces mechanical properties such as impact resistance and the like. Thus, the broad molecular weight distribution causes suppression in the desired mechanical properties of the ultrahigh molecular weight polyethylene.

PTL1 discloses that an ultrahigh molecular weight polyethylene having a narrow molecular weight distribution and relatively low melt viscosity can be obtained by using a single-site catalytic system having reasonably high polymerization activity.

### [Citation List]

### [Patent Literature]

[PTL 1] Japanese Patent No. 3530020 (US6309997)

### [Summary of Invention]

### [Technical problem]

The ultrahigh molecular weight polyethylene described in PTL 1 is found to have lower molecular weight distribution compared to that produced using a Ziegler-Natta catalyst. However, unlike the polymer produced by Ziegler-Natta catalyst, the polymer produced by PTL1 is found to have lower impact strength. On the other hand, an ultrahigh molecular weight polyethylene synthesized using a Ziegler-Natta catalyst has fusion defects between the powder particles, and is thus easily affected by oxidative degradation, which results in a remarkable reduction in the impact strength.

The objective of the present invention is to provide an ultrahigh molecular weight polyethylene resin which enables preparation of a molded body having excellent impact strength without having grain (or particle) boundaries - the latter found in the Ziegler-Natta produced polymer are attributed to fusion defects between the grains (or particles) of nascent powder.

### [Solution to Problem]

The present inventors have conducted diligent research to increase the impact strength and provide a grain boundary free product. The inventors discovered that an ultrahigh molecular weight polyethylene resin that enables preparation of a molded product having excellent impact resistance can be obtained by synthesizing the resin under specific conditions by using a catalyst defined as a single-site catalyst having high polymerization activity. Surprisingly, by only changing the reaction conditions without significantly varying the molecular weight of the synthesized UHMWPE, the impact strength of the molded body can be enhanced significantly. The present invention includes the following:
[1] An ultrahigh molecular weight polyethylene resin having a weight average molecular weight of 1.0×10⁶ g/mol to 15.0×10⁶ g/mol, and a molecular weight distribution ranging between 1.2 to 6.0.
[2] The ultrahigh molecular weight polyethylene resin according to [1], wherein a bulk density thereof is 0.03 g/ml to 0.1 g/ml.
[3] The ultrahigh molecular weight polyethylene resin according to [1] or [2], wherein the time required for the storage modulus to reach an equilibrium state in melt dynamic viscoelasticity measurement is 30,000 seconds to 60,000 seconds.
[4] The ultrahigh molecular weight polyethylene resin according to any one of [1] to [3], wherein the normalized storage modulus (G'/G⁰_{N}) in a melt dynamic viscoelasticity test is between 0.2 to 0.6.
[5] The ultrahigh molecular weight polyethylene resin according to any one of [1] to [4], wherein the Izod impact strength is at least 75 kJ/m².
[6] The ultrahigh molecular weight polyethylene resin according to [5], wherein the Izod impact strength is 90 kJ/m² or more and the type of failure is non-break.
[7] An ultrahigh molecular weight polyethylene molded body comprising the ultrahigh molecular weight polyethylene resin according to any one of [1] to [6].
[8] An ultrahigh molecular weight polyethylene molded body according to [7], wherein the resin particles have no particle or grain boundary with each other.
[9] A sliding member containing the ultrahigh molecular weight polyethylene molded body according to [7] or [8].
[10] A medical implant containing the ultrahigh molecular weight polyethylene molded body according to [7] or [8].
[11] An industrial product selected from the group consisting of a rope, a cable, a net, clothing, a ballistic resistant article, a body-armor protection object, a membrane and a film comprising the ultrahigh molecular weight polyethylene resin according to any one of [1] to [6].
[12] A method for producing an ultrahigh molecular weight polyethylene resin, comprising a step of performing polymerization of ethylene in the presence of a single-site catalyst comprising a transition metal compound and an organometallic compound at a polymerization temperature of 10 to 90 °C for a polymerization time of 5 to 30 minutes under an ethylene pressure of normal pressure up to 5 MPa.
[13] A method according to [12], wherein the ultrahigh molecular weight polyethylene resin is as defined in any one of [1] to [6].
[14] A method according to [12] or [13], wherein the polymerization temperature is 40 to 90 °C.
[15] A method according to any one of [12] to [14], wherein the polymerization time is 3 to 15 minutes and/or the polymerization is performed under an ethylene pressure of from 0.15 to 5 MPa.

### [Advantageous Aspects of the Invention]

According to the present invention, when a molded body is prepared by using a molding method such as thermo-compression molding and the like, there can be manufactured an ultrahigh molecular weight polyethylene molded body having good impact resistance. Such an ultrahigh molecular weight polyethylene molded body becomes an excellent sliding member.

### [Description of Embodiments]

In the following, the present invention will be specifically described.

### [Ultrahigh molecular weight polyethylene resin]

The ultrahigh molecular weight polyethylene resin of the present invention has a weight average molecular weight of 1.0×10⁶ g/mol to 15.0×10⁶ g/mol, preferably 1.0×10⁶ g/mol to 9.0×10⁶ g/mol, and more preferably 1.0×10⁶ g/mol to 5.0×10⁶ g/mol. As used herein, the weight average molecular weight is typically as measured by performing a melt dynamic viscoelasticity measurement. Optionally, the weight average molecular weight is measured by performing a melt dynamic viscoelasticity measurement using a dynamic viscoelasticity measuring apparatus (for instance DHR, manufactured by TA Instruments Inc.) comprising subjecting a sample of the ultrahigh molecular weight polyethylene resin comprising 1.0 wt% of Irganox 1010 to measurement of frequency dependence of the storage modulus and the loss modulus under a measurement temperature of 160°C and a strain of 0.1%. The weight average molecular weight may be determined by using Orchestrator Software V7.2.0.4 produced by TA Instruments Inc.

Under a defined polymerization window the impact resistance of the molded object is found to improve - which is attributed to the increase in entanglement density perceived during polymerization. The increase in the entanglement density is quantitatively measured by measuring the storage elastic modulus at t=0, when the compressed polymer, as synthesized, reaches its melt state for the first time. Furthermore, by reducing the number of entanglements during synthesis the ultrahigh molecular weight polyethylene is found to have a lower melt viscosity retrospectively facilitating the ease in molding of the object.

The ultrahigh molecular weight polyethylene resin of the present invention has a molecular weight distribution of 1.2 to 6.0, preferably 1.5 to 4.5 and more preferably 1.7 to 4.0. As used herein, the molecular weight distribution is typically as measured by performing a melt dynamic viscoelasticity measurement. Optionally, the molecular weight distribution is measured by performing a melt dynamic viscoelasticity measurement using a dynamic viscoelasticity measuring apparatus (for instance DHR, manufactured by TA Instruments Inc.) comprising subjecting a sample of the ultrahigh molecular weight polyethylene resin comprising 1.0 wt% of Irganox 1010 to measurement of frequency dependence of the storage modulus and the loss modulus under a measurement temperature of 160°C and a strain of 0.1%. The molecular weight distribution may be determined by using Orchestrator Software V7.2.0.4 produced by TA Instruments Inc. When the resin is formed into a molded body, impact resistance thereof becomes improved.

The bulk density of the ultrahigh molecular weight polyethylene resin of the present invention is typically between 0.03 g/ml to 0.1 g/ml, for instance from 0.03 g/ml to 0.09 g/ml. The bulk density is preferably 0.03 g/ml to 0.06 g/ml. As used herein, the bulk density is typically as measured according to ASTM D1895/B. When the bulk density of the ultrahigh molecular weight polyethylene of the present invention is less than 0.03 g/ml, weak points tend to be generated due to formation of a coarse portion on compression of the powder. Further, when the bulk density of the ultrahigh molecular weight polyethylene of the present invention is 0.1 g/ml or more, it tends to adhere to a silo or a hopper of a processing machine.

The time for a storage modulus of the ultrahigh molecular weight polyethylene of the present invention to reach an equilibrium state from time t = 0 of reaching the melt is typically 30,000 seconds to 60,000 seconds, and preferably 32,000 seconds to 58,000 seconds. As used herein, the time for the storage modulus to reach an equilibrium state is typically as measured by melt dynamic viscoelasticity. Optionally, the time for the storage modulus to reach an equilibrium state is measured by using a dynamic viscoelasticity measuring apparatus (for instance DHR, manufactured by TA Instruments Inc.) comprising subjecting a sample of an ultrahigh molecular weight polyethylene resin comprising 1.0 wt% of Irganox 1010 to measurement of the change in storage modulus under conditions of a measurement temperature of 160°C, a frequency of 10 rad/s, and a strain of 0.3%. The time from the start of measurement until the storage modulus reaches 98% of the maximum storage modulus is typically taken as the time required for the storage modulus to reach an equilibrium state. When the storage modulus of the resin is found to be between 30,000 seconds to 60,000 seconds the impact resistance of the molded body is found to exceed 75 kJ/m² (see Table 1).

The normalized storage modulus (G'/G⁰_{N}) in a melt dynamic viscoelasticity test of the ultrahigh molecular weight polyethylene resin of the present invention is typically 0.2 to 0.6, resulting in improvement of impact strength of a molded body obtained. As used herein, the normalized storage modulus (G'/G⁰_{N}) is optionally measured using a dynamic viscoelasticity measuring apparatus (for instance DHR, manufactured by TA Instruments Inc.) comprising subjecting a sample of an ultrahigh molecular weight polyethylene resin comprising 1.0 wt% of Irganox 1010 to measurement of the change in storage modulus with lapse of time under conditions of a measurement temperature of 160°C, a frequency of 10 rad/s, and a strain of 0.3%. The value obtained by dividing a storage modulus (G') in an equilibrium state by a storage modulus (G⁰_{N}) at t=0 (as the polymer reaches the melt for the first time) in the melt dynamic viscoelasticity measurement may be taken as the measured value.

The ultrahigh molecular weight polyethylene resin typically has an Izod impact strength which is 75 kJ/m² or more. The ultrahigh molecular weight polyethylene resin according may have an Izod impact strength is 90 kJ/m² or more and the type of failure is non-break. As used herein, the Izod impact strength is typically as measured according to ASTM D256/A by using a specimen prepared by compression molding at 180°C and 40 MPa to measure impact strength. As used herein, the type of failure of the specimen is typically as measured according to ASTM D256/A.

The ultrahigh molecular weight polyethylene resin of the present invention may be an ultrahigh molecular weight ethylene homopolymer or ultrahigh molecular weight ethylene-α-olefin copolymers such as an ultrahigh molecular weight ethylene-propylene copolymer, an ultrahigh molecular weight ethylene-1-butene copolymer, an ultrahigh molecular weight ethylene-1-hexene copolymer and an ultrahigh molecular weight ethylene-1-octene copolymer, and the like.

### [Method for producing ultrahigh molecular weight polyethylene resin]

The ultrahigh molecular weight polyethylene resin of the present invention can be produced by carrying out polymerization in the presence of a single-site catalyst and the like. In the transition metal compound which constitutes the single-site catalyst, there can be used, as a central metal, transition metal atoms of Groups 3, 4, 5, 6, and 8 of the Periodic Table such as, for example, titanium, zirconium, and the like. As the single-site catalyst, especially, a metallocene catalyst or a phenoxyimine-based catalyst such as a Ti or Zr complex with phenoxyimine ligands is preferable, and bis[N-(3-tert-butyl-salicylidene)pentafluoroaldiminato]titanium (IV) is more preferable. As the single-site catalyst, there can be used: a catalyst obtained by combining these transition metal compounds with an aluminoxane, a Lewis acidic or anionic boron compound, organic-modified clay modified with a fatty acid salt, an organic aluminum compound, and the like. Especially, it is more preferable to combine the transition metal compounds with an aluminoxane.

When producing the ultrahigh molecular weight polyethylene of the present invention, production can be performed at a polymerization temperature in the range of 10 to 90°C for a polymerization time in the range of 5 minutes to 30 minutes under a polymerization pressure in the range of normal pressure up to 100 MPa. The polymerization pressure may be in the range of from 0.1 MPa to 100 MPa. The polymerization may be performed under an ethylene pressure of from 0.15 to 5 MPa, for instance from 0.2 to 1 MPa. The ethylene pressure may be of a normal pressure of the specified ranges.

Preferably, the production is performed at a polymerization temperature in the range of 30 to 60°C for a polymerization time in the range of 5 minutes to 15 minutes under a polymerization pressure in the range of normal pressure up to 5 MPa. The polymerization temperature may be 40 to 90 °C and/or the polymerization time may be 3 to 15 minutes.

The polymerization can be performed by any of batch, semi-continuous, and continuous methods, or can also be performed in two or more separate stages by changing the polymerization conditions. In addition, the ultrahigh molecular weight polyethylene resin after completion of polymerization is dispersed in a slurry state in a polymerization solvent, and the resin is obtained by separation and recovery from the polymerization solvent by a heretofore known method, followed by drying. The ultrahigh molecular weight polyethylene resin obtained has a particulate shape.

The invention also provides an ultrahigh molecular weight polyethylene resin obtainable by the production method according to the invention. The ultrahigh molecular weight polyethylene resin may have a weight average molecular weight of 1.0×10⁶ g/mol to 15.0×10⁶ g/mol and a molecular weight distribution between 1.2 to 6.0.

### [Molded body comprising ultrahigh molecular weight polyethylene resin]

A molded body comprising the ultrahigh molecular weight polyethylene resin of the present invention is obtained by molding the ultrahigh molecular weight polyethylene resin by various molding methods such as a solid drawing method, a sintering method, a compression molding method, and the like, and has excellent impact resistance. Preferably, a molded body prepared by compression molding using the ultrahigh molecular weight polyethylene resin of the present invention has no particle boundary and, therefore, has excellent impact resistance.

In the present invention, the phrase, "having no particle boundary," means that, when a slice of a molded body having a thickness of 30 µm is measured by using a differential interference microscope (OPTIPHOT-2) under the conditions of transmission mode with a measurement magnification of 20 times and the image obtained is processed to a binary image with the discriminant analysis method by using an image processing software (Nano Hunter NS2K-Pro version3.00), the dark area in the binary image obtained is 5% or less.

### [Sliding member containing ultrahigh molecular weight polyethylene molded body]

The molded body obtained according to the present invention is excellent in characteristics such as impact resistance, abrasion resistance, and the like, and therefore can be used as a sliding member such as, for example, a lining of a hopper, a chute, and the like; a gear; a bearing; a roller; a tape reel; various guide rails; an elevator rail guide; various protective liner materials; and the like.

### [Medical implant containing ultrahigh molecular weight polyethylene molded body]

The molded body obtained according to the present invention is excellent in characteristics such as, especially, impact resistance, abrasion resistance, durability, and the like, and therefore can be used suitably as medical implants. For example, the molded body can be used as a sliding member for an artificial hip joint, an artificial knee joint, an artificial shoulder joint, an artificial spine, an artificial elbow joint, an artificial foot joint, an artificial finger joint, or the like.

### [Industrial product containing ultrahigh molecular weight polyethylene resin]

The ultrahigh molecular weight polyethylene resin of the present invention can also be processed into materials such as a fiber, or the like. Further, it may be processed into an industrial product containing the materials, such as a rope, a cable, a net, clothes, a ballistic resistant article, body-armor protection objects, membranes and films or the like.

### [Examples]

Hereinafter, the present invention will be described based on Examples. The present invention is not limited in any way by the following Examples.

### [Molecular weight and molecular weight distribution]

The molecular weight and the molecular weight distribution of the ultrahigh molecular weight polyethylene resin of the present invention were obtained by performing a melt dynamic viscoelasticity measurement. By using a dynamic viscoelasticity measuring apparatus (DHR, manufactured by TA Instruments Inc.), an ultrahigh molecular weight polyethylene resin having 1.0 wt% of Irganox 1010, an antioxidant, added thereto was subjected to measurement of frequency dependence of storage modulus and loss modulus under a measurement temperature of 160°C and a strain of 0.1%, and a molar mass and a molar mass distribution were determined by using Orchestrator Software V7.2.0.4 produced by TA Instruments Inc.

### [Bulk density]

The bulk density in the present invention was measured according to ASTM D1895/B.

### [Time required for storage modulus to reach equilibrium state in melt dynamic viscoelasticity measurement]

The time for the storage modulus to reach an equilibrium state in a melt dynamic viscoelasticity measurement of the ultrahigh molecular weight polyethylene resin of the present invention was obtained by measuring the melt dynamic viscoelasticity. By using a dynamic viscoelasticity measuring apparatus (DHR, manufactured by TA Instruments Inc.), an ultrahigh molecular weight polyethylene resin having 1.0 wt% of Irganox 1010, an antioxidant, added thereto was subjected to measurement of change in storage modulus under conditions of a measurement temperature of 160°C, a frequency of 10 rad/s, and a strain of 0.3%, and the time from the start of measurement until the storage modulus reaches 98% of the maximum storage modulus was taken as the time required for the storage modulus to reach an equilibrium state.

### [Normalized storage modulus (G'/G⁰_{N}) in melt dynamic viscoelasticity test]

The normalized storage modulus (G'/G⁰_{N}) in a melt dynamic viscoelasticity test of the ultrahigh molecular weight polyethylene resin of the present invention was obtained by measuring the melt dynamic viscoelasticity. By using a dynamic viscoelasticity measuring apparatus (DHR, manufactured by TA Instruments Inc.), an ultrahigh molecular weight polyethylene resin having 1.0 wt% of Irganox 1010, an antioxidant, added thereto was subjected to measurement of change in storage modulus with lapse of time under conditions of a measurement temperature of 160°C, a frequency of 10 rad/s, and a strain of 0.3%, and a value obtained by dividing a storage modulus (G') at t=0 (as the polymer reaches the melt for the first time) by a storage modulus (G⁰_{N}) in an equilibrium melt state in the melt dynamic viscoelasticity measurement was taken as the measured value.

### [Compression molding method]

The ultrahigh molecular weight polyethylene molded body of the present invention was prepared by compression molding. The ultrahigh molecular weight polyethylene resin of the present invention was charged into a mold with a cavity area of 63.5×12.7 mm or 40×40 mm so as to be uniform and was compressed at a maximum temperature of 180°C and a maximum force of 40 MPa for 60 minutes to prepare a molded body.

### [Izod impact test]

The Izod impact test of the present invention was performed according to ASTM D256/A by using a specimen prepared by compression molding at 180°C and 40 MPa to measure impact strength. Further, the type of failure of the specimen after the measurement was classified as follows according to ASTM D256/A:
Complete Break: A break where the specimen separates into two or more pieces.
Hinge Break: An incomplete break, such that one part of the specimen cannot support itself above the horizontal when the other part is held vertically (less than 90°included angle).
Partial Break: An incomplete break that does not meet the definition for a hinge break but has fractured at least 90% of the distance between the vertex of the notch and the opposite side.
Non-Break: An incomplete break where the fracture extends less than 90% of the distance between the vertex of the notch and the opposite side.

### [Observation of particle boundary]

In the present invention, the phrase, "having no particle boundary," means that, when a slice of a molded body having a thickness of 30 µm is measured by using a differential interference microscope (OPTIPHOT-2) under the conditions of transmission mode with a measurement magnification of 20 times and the image obtained is processed to a binary image with the discriminant analysis method by using an image processing software (Nano Hunter NS2K-Pro version3.00).

### [Forced oxidation test]

The forced oxidation test of the present invention was performed according to ASTM F2003-02 by using a specimen prepared by compression molding at 180°C and 40 MPa. The specimen after the test was further subjected to Izod impact test according to ASTM D256/A to measure the impact strength.

### [Example 1]

To a 10 L autoclave equipped with a stirrer, which had been dried by heating under vacuum, was added 9.0 L of dehydrated toluene and, after heating to 50°C, 67 ml of a 10% toluene solution of methylaluminoxane was added thereto, and the liquid phase and the gas phase were saturated with ethylene. Subsequently, a solution prepared by mixing beforehand 90 mg of bis[(3-tert-butyl-salicylidene) pentafluoroaldiminato]titanium(IV) dichloride] and 23 ml of a 10% toluene solution of methylaluminoxane was added thereto to initiate polymerization. Ethylene was supplied continuously so that the pressure was maintained at 2.0 bar and, after carrying out polymerization at 50°C for 5 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained and a molded body thereof are shown in Table 1. As shown in Table 1, it was confirmed that the molded body of the ultrahigh molecular weight polyethylene resin obtained in Example 1 had sufficient impact strength and also that it had no particle boundary. In addition, as shown in Table 1, it was confirmed that the molded body of the ultrahigh molecular weight polyethylene resin obtained in Example 1 had sufficient impact strength even after being subjected to the forced oxidation test.

### [Example 2]

To a 1.0 L autoclave equipped with a stirrer, which had been dried by heating under vacuum, was added 0.6 L of dehydrated toluene and, after heating to 50°C, 7.5 ml of a 10% toluene solution of methylaluminoxane was added thereto, and the liquid phase and the gas phase were saturated with ethylene.

Subsequently, a solution prepared by mixing beforehand 10 mg of bis[(3-tert-butyl-salicylidene)pentafluoroaldiminato]titanium(IV) dichloride and 2.5 ml of a 10% toluene solution of methylaluminoxane was added thereto to initiate polymerization. Ethylene was supplied continuously so that the pressure was maintained at 4.0 bar and, after carrying out polymerization at 50°C for 10 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained are shown in Table 1. As shown in Table 1, it was confirmed that the molded body of the ultrahigh molecular weight polyethylene resin obtained in Example 2 had sufficient impact strength.

### [Example 3]

To a 10 L autoclave equipped with a stirrer, which had been dried by heating under vacuum, was added 0.6 L of dehydrated toluene and, after heating to 50°C, 4.8 ml of a 10% toluene solution of methylaluminoxane was added thereto, and the liquid phase and the gas phase were saturated with ethylene.

Subsequently, a solution prepared by mixing beforehand 6 mg of bis[(3-tert-butyl-salicylidene)pentafluoroaldiminato]titanium(IV) dichloride and 1.2 ml of a 10% toluene solution of methylaluminoxane was added thereto to initiate polymerization. Ethylene was supplied continuously so that the pressure was maintained at 4.0 bar and, after carrying out polymerization at 50°C for 10 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained are shown in Table 1. As shown in Table 1, it was confirmed that the molded body of the ultrahigh molecular weight polyethylene resin obtained in Example 3 had sufficient impact strength.

### [Example 4]

To a 1.5 L autoclave equipped with a stirrer, which had been dried by heating under vacuum, was added 0.6 L of dehydrated toluene and, after heating to 50°C, 4.8 ml of a 10% toluene solution of methylaluminoxane was added thereto, and the liquid phase and the gas phase were saturated with ethylene.

Subsequently, a solution prepared by mixing beforehand 6 mg of bis[(3-tert-butyl-salicylidene)pentafluoroaldiminato]titanium(IV) dichloride and 1.2 ml of a 10% toluene solution of methylaluminoxane was added thereto to initiate polymerization. Ethylene was supplied continuously so that the pressure was maintained at 2.0 bar and, after carrying out polymerization at 50°C for 5 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained and thereof are shown in Table 1. As shown in Table 1, it was confirmed that the molded body of the ultrahigh molecular weight polyethylene resin obtained in Example 4 had sufficient impact strength.

### [Comparative Example 1]

Physical properties of an ultrahigh molecular weight polyethylene resin, GUR 1050 produced by Celanese Corporation are shown in Table 1. From Table 1, it was confirmed that a molded body of the ultrahigh molecular weight polyethylene resin of Comparative Example 1 showed a hinge break, did not have sufficient impact strength, and also had particle boundaries.. In addition, as shown in Table 1, it was confirmed that the molded body of the ultrahigh molecular weight polyethylene resin obtained in Comparative Example 1 exhibited a remarkable reduction in the impact strength after being subjected to the forced oxidation test.

### [Comparative Example 2]

To a 1.0 L autoclave equipped with a stirrer, which had been dried by heating under vacuum, was added 0.6 L of dehydrated toluene and, after heating to 50°C, 4.8 ml of a 10% toluene solution of methylaluminoxane was added thereto, and the liquid phase and the gas phase were saturated with ethylene. Subsequently, a solution prepared by mixing beforehand 6 mg of bis[(3-tert-butyl-salicylidene) pentafluoroaldiminato]titanium(IV) dichloride and 1.2 ml of a 10% toluene solution of methylaluminoxane was added thereto to initiate polymerization. Ethylene was supplied continuously so that the pressure was maintained at 1.2 bar and, after carrying out polymerization at 10°C for 60 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained and a molded body thereof are shown in Table 1. From Table 1, it was confirmed that a molded body of the ultrahigh molecular weight polyethylene resin of Comparative Example 2 showed a hinge break, and did not have sufficient impact strength. In the measurement of melt dynamic viscoelasticity of the ultrahigh molecular weight polyethylene resin of Comparative Example 5, the value of storage modulus (G') did not reach an equilibrium state within 150000 sec, and thus no G'/G⁰_{N} was obtained.

### [Comparative Example 3]

To a 1.0 L autoclave equipped with a stirrer, which had been dried by heating under vacuum, was added 0.6 L of dehydrated toluene and, after heating to 50°C, 4.8 ml of a 10% toluene solution of methylaluminoxane was added thereto, and the liquid phase and the gas phase were saturated with ethylene. Subsequently, a solution prepared by mixing beforehand 6 mg of bis[(3-tert-butyl-salicylidene) pentafluoroaldiminato]titanium(IV) dichloride and 1.2 ml of a 10% toluene solution of methylaluminoxane was added thereto to initiate polymerization. Ethylene was supplied continuously so that the pressure was maintained at 1.2 bar and, after carrying out polymerization at 10°C for 10 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained and a molded body thereof are shown in Table 1. From Table 1, it was confirmed that a molded body of the ultrahigh molecular weight polyethylene resin of Comparative Example 3 showed a hinge break, and did not have sufficient impact strength.

### [Comparative Example 4]

To a 1.0 L autoclave equipped with a stirrer, which had been dried by heating under vacuum, was added 0.6 L of dehydrated toluene and, after heating to 50°C, 4.8 ml of a 10% toluene solution of methylaluminoxane was added thereto, and the liquid phase and the gas phase were saturated with ethylene. Subsequently, a solution prepared by mixing beforehand 6 mg of bis[(3-tert-butyl-salicylidene) pentafluoroaldiminato]titanium(IV) dichloride and 1.2 ml of a 10% toluene solution of methylaluminoxane was added thereto to initiate polymerization. Ethylene was supplied continuously so that the pressure was maintained at 2.0 bar and, after carrying out polymerization at 10°C for 10 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained and a molded body thereof are shown in Table 1. From Table 1, it was confirmed that a molded body of the ultrahigh molecular weight polyethylene resin of Comparative Example 4 showed a hinge break, and did not have sufficient impact strength.

### [Comparative Example 5]

To a 1.0 L autoclave equipped with a stirrer, which had been dried by heating under vacuum, was added 0.6 L of dehydrated toluene and, after heating to 50°C, 4.8 ml of a 10% toluene solution of methylaluminoxane was added thereto, and the liquid phase and the gas phase were saturated with ethylene. Subsequently, a solution prepared by mixing beforehand 6 mg of bis[(3-tert-butyl-salicylidene) pentafluoroaldiminato]titanium(IV) dichloride and 1.2 ml of a 10% toluene solution of methylaluminoxane was added thereto to initiate polymerization. Ethylene was supplied continuously so that the pressure was maintained at 4.0 bar and, after carrying out polymerization at 30°C for 10 minutes, the polymerization was terminated by addition of a small amount of ethanol. The ultrahigh molecular weight polyethylene resin obtained was washed with ethanol and acetone, and thereafter dried. Physical properties of the ultrahigh molecular weight polyethylene resin obtained and a molded body thereof are shown in Table 1. From Table 1, it was confirmed that a molded body of the ultrahigh molecular weight polyethylene resin of Comparative Example 5 showed a hinge break, and did not have sufficient impact strength.

**[Table 1]**

| | Weight average molecular weight (Mw^{∗}10⁶) | Molecular weight distribution (Mw/Mn) | Bulk densit y | G'/G⁰_{N} | Time for storage modulus to reach equilibriu m state | Particle boundary | Izod impact strength | Type of failure | Izod impact strength after forced oxidation test |
|---|---|---|---|---|---|---|---|---|---|
| | (g/mol) | | (g/ml) | | (s) | | (kJ/m2) | | (kJ/m2) |
| Example 1 | 1.6 | 2.4 | 0.05 | 0.52 | 37,410 | absent | 97.1 | Non | 68.0 |
| Example 2 | 2.0 | 2.6 | 0.04 | 0.48 | 56,892 | absent | 90.0 | Non | - |
| Example 3 | 3.9 | 3.9 | 0.05 | 0.37 | 47,100 | absent | 90.4 | Partial | - |
| Example 4 | 1.9 | 1.9 | 0.05 | 0.23 | 32,890 | absent | 84.5 | Partial | - |
| Comparative Example 1 | 3.3 | 17.3 | 0.26 | 0.93 | 6,165 | Present | 72.5 | Hinge | 3.0 |
| Comparative Example 2 | 9.6 | 6.1 | 0.04 | n.d. | >150,000 | absent | 26.0 | Hinge | - |
| Comparative Example 3 | 1.7 | 1.9 | 0.05 | 0.61 | 4,400 | absent | 63.0 | Hinge | - |
| Comparative Example 4 | 3.4 | 2.9 | 0.04 | 0.34 | 69,500 | absent | 44.8 | Hinge | - |
| Comparative Example 5 | 4.0 | 2.0 | 0.05 | 0.14 | 69,000 | absent | 59.3 | Hinge | - |

## Claims

1. An ultrahigh molecular weight polyethylene resin having a weight average molecular weight of 1.0×10⁶ g/mol to 15.0×10⁶ g/mol and a molecular weight distribution between 1.2 to 6.0.

2. The ultrahigh molecular weight polyethylene resin according to Claim 1, wherein a bulk density thereof is 0.03 g/ml to 0.1 g/ml.

3. The ultrahigh molecular weight polyethylene resin according to Claim 1 or 2, wherein the time required for the storage modulus to reach an equilibrium state in melt dynamic viscoelasticity measurement is 30,000 seconds to 60,000 seconds.

4. The ultrahigh molecular weight polyethylene resin according to any one of Claims 1 to 3, wherein the normalized storage modulus (G'/G⁰_{N}) in a melt dynamic viscoelasticity test is 0.2 to 0.6.

5. The ultrahigh molecular weight polyethylene resin according to any one of Claims 1 to 4, wherein the Izod impact strength is 75 kJ/m² or more.

6. The ultrahigh molecular weight polyethylene resin according to Claim 5, wherein the Izod impact strength is 90 kJ/m² or more and the type of failure is non-break.

7. An ultrahigh molecular weight polyethylene molded body comprising the ultrahigh molecular weight polyethylene resin according to any one of Claims 1 to 6.

8. An ultrahigh molecular weight polyethylene molded body according to Claim 7, wherein the resin particles, have no particle or grain boundary with each other.

9. A sliding member containing the ultrahigh molecular weight polyethylene molded body according to Claim 7 or 8.

10. A medical implant containing the ultrahigh molecular weight polyethylene molded body according to Claim 7 or 8.

11. An industrial product selected from the group consisting of a rope, a cable, a net, clothing, a ballistic resistant article, a body-armor protection object, a membrane and a film, containing the ultrahigh molecular weight polyethylene resin according to any one of Claims 1 to 6.

12. A method for producing an ultrahigh molecular weight polyethylene resin, comprising a step of performing polymerization of ethylene in the presence of a single-site catalyst composed of a transition metal compound and an organometallic compound at a polymerization temperature of 10 to 90 °C for a polymerization time of 1 to 30 minutes under an ethylene pressure of normal pressure up to 5 MPa.

13. A method according to Claim 12, wherein the ultrahigh molecular weight polyethylene resin is as defined in any one of Claims 1 to 6.

14. A method according to Claim 12 or 13, wherein the polymerization temperature is 40 to 90 °C.

15. A method according to any one of Claims 12 to 14, wherein the polymerization time is 3 to 15 minutes and/or the polymerization is performed under an ethylene pressure of from 0.15 to 5 MPa.
